(19) Europäisches Patentamt
European Patent Office
Office européen des brevets

(11) **EP 0 916 826 A1**

(12) **EUROPÄISCHE PATENTANMELDUNG**

(43) Veröffentlichungstag:
19.05.1999 Patentblatt 1999/20

(51) Int. Cl.⁶: **F02C 1/04**, F02C 6/18,
F02C 7/08, F02C 6/00,
F04F 5/04

(21) Anmeldenummer: 97810864.5

(22) Anmeldetag: 12.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(71) Anmelder: **Asea Brown Boveri AG**
**5401 Baden (CH)**

(72) Erfinder:
**Keller, Jakob, Prof. Dr.**
**5610 Wohlen (CH)**

(54) **Gasturbine mit hydraulischem Luftkompressor**

(57) Beschrieben wird eine Vorrichtung zur Energiegewinnung mittels einer Strömungsmaschine, zu deren Antrieb eine Verdichteranordnung zur isothermen Verdichtung eines komprimierbaren Mediums, vorzugsweise Luft, vorgesehen ist, das über ein Zuleitungssystem der Strömungsmaschine direkt oder nach Zwischenschaltung einer Brennkammer, in der das komprimierte Medium unter Zusatz von Brennstoff entzündbar ist, zuführbar ist. Die Erfindung zeichnet sich dadurch aus, daß die Verdichteranordnung eine Zerstäubungseinrichtung vorsieht, die eine druckbeaufschlagte Flüssigkeit in den Einlaßbereich einer Düsenanordnung zerstäubt, die der Zerstäubungseinrichtung derart nachgeordnet ist, daß sich im Einlaßbereich eine auf die Düsenanordnung gerichtete Wasser-Luft-Gemischströmung ausbildet, daß der Düsenanordnung nachgeordnet eine Kammer vorgesehen ist, die wenigstens zwei Auslaßkanäle vorsieht, einen oberen und einen unteren Auslaßkanal, durch deren oberen Auslaßkanal die komprimierte Luft über das Zuleitungssystem der Strömungsmaschine zuführbar ist.

FIG.

EP 0 916 826 A1

# Beschreibung

## Technisches Gebiet

Die Erfindung bezieht sich auf eine Vorrichtung zur Energiegewinnung mittels einer Strömungsmaschine gemäß dem Oberbegriff des Anspruchs 1.

## Stand der Technik

Für die Energiegewinnung werden Strömungsmaschinen eingesetzt, von denen in der Kategorie der Warmekraftmaschine die Gasturbine ein weitverbreitetes energieumwandelndes Aggregat darstellt. Gasturbinen werden mit den Verbrennungsgasen flüssiger oder gasförmiger Brennstoffe betrieben. Ein typischer Gasturbinenaufbau weist einen Luftverdichter auf, auch Turbokompressor genannt, der Frischluft ansaugt, die typischerweise auf einen Druck von 4 bis 6 bar verdichtet und in einen Wärmetauscher gedrückt wird, in dem sie durch noch heiße, der Turbine entströmenden Verbrennungsgase vorgewärmt wird. Schließlich gelangt die vorgewärmte und komprimierte Zuluft gemeinsam mit Brennstoffen in eine Brennkammer, wobei Heißbzw. Verbrennungsgase von wenigstens 600°C entstehen. Diese Verbrennungsgase strömen mit großer Geschwindigkeit in die Turbine und treiben diese an, die für gewöhnlich mit einem Generator zur Stromerzeugung verbunden ist.

Eine Vielzahl von Anstrengungen werden unternommen, den Betrieb von Gasturbinen hinsichtlich ihrer Leistungsdichte und Wirkungsgrad zu verbessern. Der Wirkungsgrad einer Gasturbine hängt grundsätzlich vom Verhältnis des Energieeintrages in die Gasturbine zu der durch die Gasturbine umgesetzten Energie ab, die mittels eines Generators in elektrische Energie umwandelbar ist. So gilt es, den Energieanteil, der theoretisch von den Verbrennungsgasen der Gasturbine zur Verfügung gestellt wird, aber nicht in elektrische Energie umgewandelt wird, zu reduzieren. Da bei konventionellen Gasturbinenanlagen der Luftverdichter durch eine gemeinsame Welle mit der Gasturbine verbunden ist und von der Turbine angetrieben wird, geht beispielsweise ebendieser Energieanteil, der für den Antrieb der Verdichterstufe sorgt, beim Gewinn an elektrischer Energie verloren.

Neben der Verbesserung der obengenannten Gesichtspunkte bezüglich der Leistungsdichte und des Wirkungsgrades von Gasturbinen, spielt auch die thermische Belastbarkeit der einzelnen Komponenten, die für den Betrieb von Gasturbinen erforderlich sind, für die Konzeption und Auslegung derartige Anlagen eine zunehmend bedeutende Rolle. Nicht zuletzt aus Wettbewerbsgründen gilt es Gasturbinenanlagen nicht zu aufwendig und demzufolge zu kostspielig zu gestalten aber andererseits langlebige und hochqualitative Produkte anzubieten.

So bestehen beispielsweise konventionelle Verdichterstufen jeweils aus einem, mit Lauf- und Leitschaufeln bestückten Rotor und Stator durch die, die durch die Verdichterstufe hindurchströmende Luft durch die Kompression von Umgebungstemperatur auf bis zu über 500°C erhitzt wird. Derartig hohe Temperaturen strapazieren die verwendeten Materialien in der Verdichterstufe erheblich, wodurch die Lebensdauer der einzelnen beteiligten Komponenten nachhaltig beeinträchtigt werden, so daß aufwendige und umfangreiche Kühlmaßnahmen zu treffen sind, um die Widerstandsfähigkeit der Materialien im Verdichterbereich gegenüber dem Auftreten von hohen Temperaturen zu steigern.

## Darstellung der Erfindung

Der Erfindung liegt die Aufgabe zugrunde, eine Vorrichtung zur Energiegewinnung mittels einer Strömungsmaschine nach dem Oberbegriff des Anspruchs 1 derart auszugestalten, daß die Leistungsdichte und der Wirkungsgrad sowie die Lebensdauer der Komponenten der Strömungsmaschine, insbesondere ihrer thermisch belasteten Komponenten, gesteigert werden sollen.

Die Lösung der der Erfindung zugrundeliegenden Aufgabe ist im Anspruch 1 angegeben. Den Erfindungsgedanken vorteilhafte ausgestaltende Merkmale sind Gegenstand der Unteransprüche.

Erfindungsgemäß ist eine Vorrichtung zur Energiegewinnung mittels einer Strömungsmaschine, vorzugsweise einer Gasturbine, zu deren Antrieb eine Verdichteranordnung zur Verdichtung eines komprimierbaren Mediums, vorzugsweise Luft, vorgesehen ist, das über ein Zuleitungssystem der Strömungsmaschine direkt oder nach Zwischenschaltung einer Brennkammer, in der das komprimierte Medium unter Zusatz von Brennstoff entzündbar ist, zuführbar ist, derart ausgebildet, daß die Verdichteranordnung wenigstens eine Verdichterstufe vorsieht, in der das Medium isotherm komprimiert wird und die eine Zerstäubungseinrichtung vorsieht, die eine druckbeaufschlagte Flüssigkeit in den Einlaßbereich einer Düsenanordnung zerstäubt, die der Zerstäubungseinrichtung derart nachgeordnet ist, daß sich im Einlaßbereich eine auf die Düsenanordnung gerichtete Wasser-Luft-Gemischströmung ausbildet. In Strömungsrichtung ist der Düsenanordnung eine Kammer nachgeordnet, die wenigstens zwei Auslaßkanäle vorsieht, einen oberen und einen unteren Auslaßkanal, durch deren oberen Auslaßkanal die isotherm komprimierte Luft über das Zuleitungssystem der Strömungsmaschine zuführbar ist.

Der Erfindung liegt die Idee zugrunde, Luft im Rahmen einer isothermen Kompression, in der die Luft vergleichbar hoch verdichtet werden kann, wie es auch im Falle konventioneller Luftverdichterstufen möglich ist, jedoch ohne auf hohe Kompressionstemperaturen zu gelangen, in einen vorverdichteten Zustand überzuführen, so daß diese unter Vermeidung eines konventionellen Luftverdichters und somit Fortfall der Notwendigkeit des Antriebes des Luftverdichters durch die Gasturbine, direkt für den Antrieb der Gasturbine zur Verfügung steht.

Ferner ist es möglich, isotherm vorkomprimierte Luft einer konventionellen Hochdruckvorverdichterstufe zuzuleiten, durch die die Luftdichte auf einen festgelegten Sollwert erhöht wird. Auf diese Weise wird die Temperatur der hochverdichteten Luft nach passieren der hochverdichtenden Verdichtereinheit von üblicherweise 555°C auf unter 300°C reduziert. Das niedrige Temperaturniveau der hochverdichteten Luft innerhalb der Verdichtereinheit trägt insbesondere dazu bei, daß jegliche in der Verdichtereinheit vorhandenen Komponenten, wie beispielsweise Laufschaufeln am Rotor sowie Leitschaufeln am Stator, geringeren Temperaturbelastungen ausgesetzt sind, so daß auf Kühlmaßnahmen vollständig oder zumindest teilweise verzichtet werden kann, wodurch die Anordnung einfacher in der Wartung und kostengünstiger wird.

Schließlich bietet eine Gasturbine mit der erfindungsgemäßen vorgeschalteten isothermen Kompression verbesserte Eigenschaften hinsichtlich der Nutzung der Abwärme der aus der Gasturbine austretenden Abgase, zumal, wie vorstehend dargelegt, das Temperaturniveau der hochverdichteten Luft nach Austritt aus einer der isothermen Kompression nachgeschalteten Hochdruckvorverdichterstufe geringer ist, als bei konventionellen Gasturbinenanlagen und daher ein besserer Wärmeübergang zwischen einem Wärmetauscher, in dem die Abgase der Gasturbine rückgeführt werden (Rekuperator) und der hochverdichteten Luft stattfindet.

Ein Nachschalten einer hochverdichtenden Verdichterstufe nach der isothermen Kompression erfordert zwar wiederum einen kinematischen Antrieb durch die Turbine, wodurch der vorstehend beschriebene Leistungsverlust der Gasturbine entsteht, doch ist dieser Energieanteil erheblich gegenüber der ausschließlichen Vorverdichtung mittels konventioneller Verdichterstufen reduziert. Zudem tragen die niedrigeren Temperaturen der hochverdichteten Zuluft nach Austritt aus der hochverdichtenden Verdichterstufe zu einem besseren Wärmeübergang beim Rekuperator bei, was sich positiv auf eine Reduktion der Abgasemissionswerte auswirkt.

Besonders bei modernen Gasturbinen mit hohem Druckverhältnis übersteigt die Temperatur der vom Verdichter komprimiertem Luft die Temperatur des Abgases nach der Turbine. Bereits aus diesem Grund ist eine Rekuperation der Abwärme nicht möglich. Bei der erfindungsgemäßen isothermen Kompression kann die Abwärme mittels Rekuperation jedoch zu einem großen Teil zurückgewonnen werden.

Die erfindungsgemäße isotherme Vorkompression von Luft vor Eintritt in eine Gasturbine oder in eine vor der Gasturbine vorgeschaltete Hochdruck-Verdichterstufe erfolgt in besonders vorteilhafter Weise unter Ausnutzung der Gravitation entlang einer Gefällstrecke, entlang der Wasser durch eine Hochdruckwasserleitung fällt.

Am unteren Ende der Hochdruckwasserleitung ist eine Zerstäubungseinrichtung vorgesehen, die das druckbeaufschlagte Wasser in den Einlaßbereich einer Düsenanordnung zerstäubt, die der Zerstäubungseinrichtung derart nachgeordnet ist, daß sich im Einlaßbereich eine auf die Düsenanordnung gerichtete Wasser-Luft-Gemischströmung ausbildet. In Strömungsrichtung der Düsenanordnung ist eine Hochdruckkammer nachgeordnet, in die das Wasser-Luft-Gemisch mit hoher Geschwindigkeit aufgrund der Düsenwirkung einströmt. Hierbei trennen sich Wasser und Luft, wobei die Luft innerhalb der Hochdruckkammer aufgrund der Stauwirkung innerhalb der Kammer isotherm komprimiert wird. Die Hochdruckkammer weist überdies wenigstens zwei Auslaßkanäle auf, einen oberen und einen unteren Auslaßkanal, durch deren oberen Auslaßkanal die isotherm Luft über das Zuleitungssystem der Strömungsmaschine zuführbar ist.

Der Einsatz der erfindungsgemäßen Kombination aus isothermer Vorverdichtung und einer energieerzeugenden Strömungsmaschine, vorzugsweise einer Gasturbine, eignet sich besonders an orographisch hochgelegenen Wasservorkommen, wie beispielsweise Bergseen, aus denen Wasser für eine hydraulische Kompression entnommen werden kann.

Die in der Hochdruckkammer isotherm vorverdichtete Luft ist über das entsprechende Zuleitungssystem mit der Strömungsmaschine direkt verbunden, falls der Verdichtungsgrad der Luft genügend hoch ist. Andernfalls ist der Auslaßkanal mit einer Hochdruckvorverdichterstufe verbunden, mittels der die Luft auf einen gewünschten Wert vorverdichtet werden kann.

Um die Vorteile der isothermen Kompression auch an Orten zu nutzen, an denen keine durch die Orographie vorgegebene natürliche Gefällstrecken vorhanden sind, ist das Wasser in den vorstehend geschilderte Düsenanordnung auch mittels Rotationsmaschinen oder mittels Hochdruckstrahl-Anordnungen mit hohen Strömungsgeschwindigkeiten einleitbar, so daß grundsätzlich das Erzielen der isothermen Kompression unabhängig von orographischen Bedingungen möglich ist. Derartige Lösungen erfordern jedoch einen zusätzlichen Energieeintrag, der jedoch im Gesamtwirkungsgrad beim Betrieb einer Gasturbine mit zu berücksichtigen ist.

Die beschriebene Verdichterstufe eignet sich besonders gut bei Gefällstrecken mit Höhenunterschieden von über 500 m.

Das nach Durchlaufen der Gefällstrecke am Ende der Wasserleitung, unter hohem Druck ankommende Wasser, wird mittels der Zerstäubungseinrichtung in feinste Wassertröpfchen zerstäubt, deren Tröpfchendurchmesser typischerweise 100 µm und kleiner betragen. Die Zerstäubungseinrichtung ist im Einlaßbereich der Düsenanordnung angebracht, die vorzugsweise als 2-Phasen-Lavall-Düse ausgebildet ist.

Durch das unter sehr hohem Druck stehende Wasser werden nach Passieren der Zerstäubungseinrichtung Strömungsgeschwindigkeiten der einzelnen Wassertröpfchen von wenigstens 100 m/s erreicht, die sich aufgrund der Orientierung der Zerstäubungseinrichtung und Ausbildung des Einlaßbereiches der Düsenanordnung in Richtung der sich verjüngenden Düsenöffnung der Laval-Düse zu bewegen.

Eine 2-Phasen-Laval-Düse zeichnet sich durch ihren besonderen Querschnittsverlauf aus, der derart gewählt ist, daß die relative Geschwindigkeitsdifferenz von Luft und Wasser stets kleiner bleibt als ein bestimmter Wert ε, der mit dem Energieumsetzungswirkungsgrad in der folgenden Weise zusammenhängt:

$$\frac{v_{Wasser} - v_{Luft}}{v_{Wasser}} \leq \varepsilon$$

mit

$v_{Wasser}$: lokale Wassergeschwindigkeit
$v_{Luft}$ : lokale Luftgeschwindigkeit
mit bspw. $\varepsilon = 0{,}05$

Diese Wirkungsgradanforderung führt zu einer raschen Querschnittsänderung bei kleinen Tröpfchen und kurzer Baulänge der Lavaldüse und zu einer langsamen Querschnittsänderung bei großen Tröpfchen und großer Baulänge.

Für die Schallgeschwindigkeit des Luft-Wasser-Gemisches gilt im einzelnen:

$$c = \sqrt{\frac{p}{\alpha \cdot [\alpha\rho_{Luft} + (1-\alpha)\rho_{Wasser}]}}$$

mit:

c: Schallgeschwindigkeit des Gemisches
p: statischer Druck
$\alpha$: Volumenfraktion der Luft
$\rho_{Luft}$: Dichte der Luft
$\rho_{Wasser}$: Dichte des Wassers ($1000\,kg/m^3$)

Die Luftdichte sowie der Druck sind via Zustandsgleichung mit der Temperatur verknüpft:

$$\frac{p}{\rho_{Luft} \cdot T} = R \approx 287 \, \frac{m^2}{s^2 K}$$

mit

T: Temperatur
R: Gaskonstante der Luft

In der 2-Phasen-Lavaldüse wird das Wasser-Luft-Gemisch auf eine sehr kleine Geschwindigkeit abgebremst. Hier ist von entscheidender Bedeutung, daß ein 2-Phasen-Gemisch von Luft und Wasser in aller Regel eine sehr niedrige Schallgeschwindigkeit aufweist. Die Schallgeschwindigkeit beträgt zum Eintritt in die Lavaldüse typischerweise nur etwa 23 m/s, die Strömungsgeschwindigkeit des Gemisches an dieser Stelle hingegen etwa 100-150 m/s. Die Strömung befindet sich hier also im hohen Überschallbereich. Aufgrund der Abbremsung des Gemisches in der Lavaldüse steigt der Druck stark an. Auch die Schallgeschwindigkeit steigt mit zunehmenden Druck stark an. Andererseits sinkt die Strömungsgeschwindigkeit auf sehr kleine Werte ab. Wie in jeder Lavaldüse wird die Machzahl 1 im engsten Querschnitt durchschritten.

Neben der beschriebenen Wasserdruckerzeugung mittels Gefällstrecke können auch alternative druckerzeugende Techniken eingesetzt werden, die Wasser unter hohem Druck gezielt einer Zerstäubungseinrichtung zu führen. Der Druckaufbau des Wassers sollte unabhängig von seiner Entstehungsweise dazu führen, daß das Wasser mittels einer Zerstäubungseinrichtung fein zerstäubt wird und daß das Wasser/Luft-Volumenverhältnis ca. 0.05 bis 0,1 beträgt.

Typische Baulängen von Laval-Düsen betragen ca. 15 m; doch werden Tröpfchengrößen mit einem Durchmesser von weniger als 100 μm verwendet, so können auch Lavaldüsen mit Baulängen von weniger als 15 m sehr hohe Wirkungsgrade erzielen. Bei größer werdenden Tröpfendurchmessern muß jedoch die minimale Länge der Laval-Düse ansteigen, falls eine Wirkungsgradeinbuße vermieden werden soll.

**Kurze Beschreibung der Erfindung**

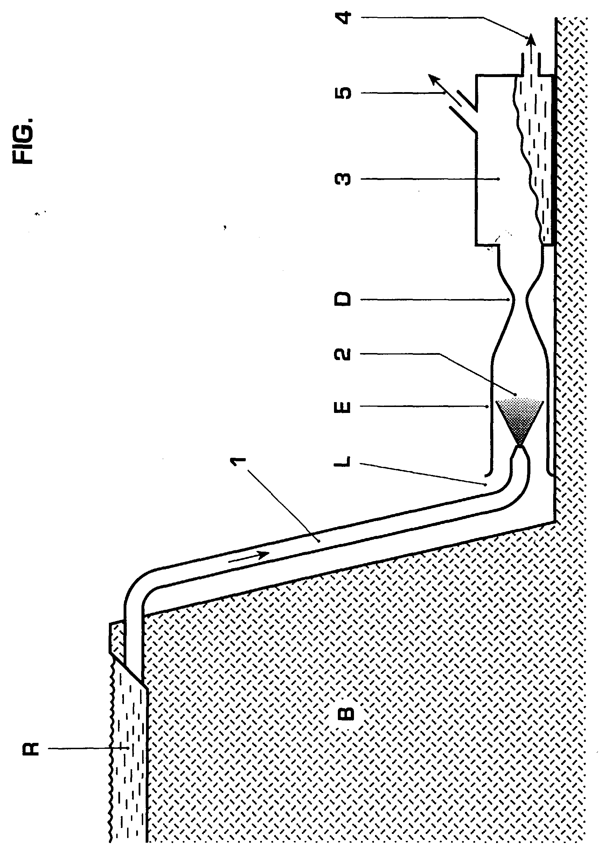

Die Erfindung wird nachstehend ohne Beschränkung des allgemeinen Erfindungsgedankens anhand eines Ausführungsbeispieles unter Bezugnahme auf die Zeichnung exemplarisch beschrieben:

**Wege zur Ausführung der Erfindung, gewerbliche Verwendbarkeit**

In der einzigen Figur wird die Orographie eines Berges B genutzt, um das hoch am Berg liegende Wasserreservoir R zum Antrieb einer nicht in der Figur dargestellten Strömungsmaschine zu nutzen. Mit einer konventionell ausgebildeten Wasserleitung 1 ist das Wasserreservoir R verbunden, durch die das Wasser entlang einer Gefällstrecke mit einer Höhendifferenz von typischerweise > 500 m in die Tiefe stürzt. Das durch die Gravitation beschleunigte Wasser gelangt am Ende der Wasserleitung 1 durch eine Zerstäubungseinrichtung 2 in den Einlaßbereich E einer Düsenanordnung D. Die Zerstäubungseinrichtung 2 weist eine Düsenauslaßöffnung auf, durch die das unter hohem Druck stehende Wasser in kleinste Wassertröpfchen zerstäubt wird. Zur Bildung eines Wasser-Luft-Gemisches sind am Eintritt des Einlaßbereiches E Luftzuführöffnungen L vorgesehen, durch die genügend viel Luft zur Bildung eines gewünschten Wasser-Luft-Gemisches zugeführt werden kann. Die Düsenanordnung D sowie der Einlaßbereich E der Düsenanordnung D, die vorzugsweise als eine Zwei-Phasen-Laval-Düse ausgebildet ist, ist derart konfiguriert, so daß das Wasser-Luft-Gemisch mit typischerweise einer Wassertropfengeschwindigkeit von ca. 100 m/s und mehr auf die sich verjüngende Düsenöffnung der Düsenanordnung D gerichtet ist. In der Lavaldüse wird das Gemisch auf eine kleine Geschwindigkeit verzögert und dabei komprimiert.

Die Lavaldüse ist in Strömungsrichtung mit einer Druckkammer 3 verbunden, in der das aus der Düsenanordnung austretende Wasser-Luft-Gemisch regelrecht aufgefangen wird. Durch den sich in der Überdruckkammer ausbildenden hohen Staudruck wird die Luft im Wasser-Luft-Gemisch isotherm komprimiert, wobei gleichzeitig eine Abtrennung des Wassers von der Luft innerhalb der Kammer erfolgt. Über eine untere Auslaßöffnung 4 kann das sich abgeschiedene Wasser kontrolliert aus der Kammer entnommen werden. Die innerhalb der Kammer isotherm komprimierte Luft gelangt über eine zweite Auslaßöffnung 5 und einem nicht in der Figur dargestellten Zuleitungssystem zu der ebenfalls in der Figur nicht dargestellten Strömungsmaschine, um diese entsprechend anzutreiben.

Die vorstehend beschriebene Technik der isothermen Kompression bezieht sich ausdrücklich auf die Erzeugung von Wasser-Luft-Gemische, deren Wasser/Luft-Verhältnisse zwischen 30 und 40% liegen. Derartige Gemische können beispielsweise unter Nutzung von Gefällstrecken mit Höhenunterschieden von > 500 m realisiert werden. Aus Kostengründen sowie auch Effizienzgründen wird das zu beschleunigende Wasser durch normale Wasserleitungen stromab geführt und mittels geeigneter Zerstäubungseinrichtungen in der gewünschten Weise zerstäubt.

**Bezugszeichenliste**

| | |
|---|---|
| 1 | Wasserleitung |
| 2 | Zerstäubungseinrichtung |
| 3 | Hochdruckkammer |
| 4 | Auslaßöffnung für Wasser |
| 5 | Auslaßöffnung für Luft |
| B | Berg |
| D | Düsenanordnung |
| E | Einlaßbereich |
| L | Luftzuführöffnungen |
| R | Wasserreservoir |

**Patentansprüche**

1. Vorrichtung zur Energiegewinnung mittels einer Strömungsmaschine, zu deren Antrieb eine Verdichteranordnung zur isothermen Verdichtung eines komprimierbaren Mediums, vorzugsweise Luft, vorgesehen ist, das über ein Zuleitungssystem der Strömungsmaschine direkt oder nach Zwischenschaltung einer Brennkammer, in der das komprimierte Medium unter Zusatz von Brennstoff entzündbar ist, zuführbar ist, dadurch gekennzeichnet, daß die Verdichteranordnung eine Zerstäubungseinrichtung (2) vorsieht, die eine druckbeaufschlagte Flüssigkeit in den Einlaßbereich (E) einer Düsenanordnung (D) zerstäubt, die der Zerstäubungseinrichtung (2) derart nachgeordnet ist, daß sich im Einlaßbereich (E) eine auf die Düsenanordnung (D) gerichtete Wasser-Luft-Gemischströmung ausbildet, daß in Strömungsrichtung der Düsenanordnung (D) eine Hochdruckkammer (3) nachgeordnet ist, die wenigstens zwei Auslaßkanäle vorsieht, einen oberen (5) und einen unteren (4) Auslaßkanal, durch deren oberen Auslaßkanal (5) die komprimierte Luft über das Zuleitungssystem der Strömungsmaschine zuführbar ist.

2. Vorrichtung nach Anspruch 1, dadurch gekennzeichnet, daß die Düsenanordnung (D) eine Laval-Düse ist.

3. Vorrichtung nach Anspruch 2, dadurch gekennzeichnet, daß die Laval-Düse eine 2-Phasen-Laval-Düse ist.

4. Vorrichtung nach einem der Ansprüche 1 bis 3,dadurch gekennzeichnet, daß die Flüssigkeit vor Eintritt in die Zerstäubungseinrichtung (2) eine Gefällstrecke durchläuft.

5. Vorrichtung nach Anspruch 4, dadurch gekennzeichnet, daß die Gefällstrecke eine Höhendifferenz von ca. 500 m und mehr überwindet.

6. Vorrichtung nach einem der Ansprüche 1 bis 5, dadurch gekennzeichnet, daß die Flüssigkeit Wasser ist.

7. Vorrichtung nach Anspruch 6, dadurch gekennzeichnet, daß die Zerstäubungseinrichtung (2) das Wasser zu Wassertröpfchen zerstäubt, die einen Durchmesser von typischerweise 100 $\mu$m und kleiner aufweisen.

8. Vorrichtung nach Anspruch 4, dadurch gekennzeichnet, daß die Flüssigkeit vor Eintritt in die Zerstäubungseinrichtung (2) eine Strömungsgeschwindigkeit von ca. 100 m/s aufweist.

9. Vorrichtung nach einem der Ansprüche 1 bis 8,dadurch gekennzeichnet, daß der Einlaßbereich (E) einer Düsenanordnung (D) wenigstens eine Zuströmöffnung für Luft vorsieht.

10. Vorrichtung nach einem der Ansprüche 1 bis 9, dadurch gekennzeichnet, daß in die Hochdruckkammer (3) das Wasser-Luft-Gemisch mit hoher Geschwindigkeit einströmt und in der sich das Wasser von der Luft abscheidet, wobei das Wasser durch die untere Auslaßöffnung aus der Hochdruckkammer (3) austritt.

11. Vorrichtung nach einem der Ansprüche 1 bis 10, dadurch gekennzeichnet, daß die gerichtete Wasser-Luft-Gemischströmung vor Eintritt in die Düsenanordnung (D) ein Wasser/Luft-Volumenverhältnis zwischen 0,05 und 0.1 aufweist.

12. Vorrichtung nach einem der Ansprüche 1 bis 11, dadurch gekennzeichnet, daß die Strömungsmaschine eine Gasturbine ist.

13. Vorrichtung nach Anspruch 12, dadurch gekennzeichnet, daß die in der Hochdruckkammer (3) isotherm verdichtete Luft einem hochverdichtenden Vorverdichter zuführbar ist, der mit einer Brennkammer verbunden ist, aus der die in der Brennkammer entstehenden Heißgase der Gasturbine zuführbar sind.

14. Vorrichtung nach Anspruch 12, dadurch gekennzeichnet, daß die isotherm verdichtete Luft direkt in die Brennkammer einleitbar ist.

15. Vorrichtung nach Anspruch 14, dadurch gekennzeichnet, daß die isotherm verdichtete Luft vor Eintritt in die Brennkammer thermisch an einen Wärmetauscher, der von der Abwärme der Abgase der Gasturbine thermisch gespeist wird, gekoppelt ist.

FIG.

EP 0 916 826 A1

**Europäisches Patentamt**

# EUROPÄISCHER RECHERCHENBERICHT

Nummer der Anmeldung

EP 97 81 0864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 797 563 A (RICHARDSON TIMOTHY M)<br><br>* Spalte 1, Zeile 47 – Spalte 2, Zeile 8 *<br>* Spalte 2, Zeile 40 – Zeile 47 *<br>* Spalte 3, Zeile 47 – Spalte 4, Zeile 23 *<br>* Spalte 4, Zeile 32 – Zeile 40 *<br>* Spalte 4, Zeile 49 – Spalte 5, Zeile 5 *<br>* Spalte 5, Zeile 39 – Zeile 58 *<br>* Spalte 5, Zeile 66 – Spalte 6, Zeile 2 *<br>* Spalte 7, Zeile 28 – Zeile 36 * | 1,4-6, 8-10, 12-15 | F02C1/04<br>F02C6/18<br>F02C7/08<br>F02C6/00<br>F04F5/04 |
| Y<br>Y | * Abbildungen * | 2,3<br>7,11 | |
| Y | DE 27 19 897 A (REINSCH ARNOLD OTTO WINFRIED)<br>* Anspruch 1 *<br>--- | 2,3 | |
| Y | CUNNINGHAM R G ET AL: "JET BREAKUP AND MIXING THROAT LENGTHS FOR THE LIQUID JET GAS PUMP"<br>JOURNAL OF FLUIDS ENGINEERING,<br>Bd. 96, Nr. 3, September 1974,<br>Seiten 216-226, XP002033997<br>*Pages 218-9,heading "Experimental Program";Fig. 4 *<br>--- | 7,11 | RECHERCHIERTE SACHGEBIETE (Int.Cl.6)<br><br>F02C<br>F04F<br>F03B |
| X | US 5 099 648 A (ANGLE LONNIE L)<br>* Zusammenfassung *<br>* Spalte 2, Zeile 39 – Spalte 3, Zeile 5 *<br>--- | 1 | |
| X | US 4 307 299 A (NORTON JOSEPH R)<br>* Spalte 5, Zeile 11 – Zeile 29 *<br>* Spalte 6, Zeile 12 – Zeile 42;<br>Abbildungen *<br>---<br><br>-/-- | 1 | |

Der vorliegende Recherchenbericht wurde für alle Patentansprüche erstellt

| Recherchenort | Abschlußdatum der Recherche | Prüfer |
|---|---|---|
| DEN HAAG | 16.April 1998 | Criado Jimenez, F |

EPO FORM 1503 03.82 (P04C03)

**Europäisches Patentamt**

# EUROPÄISCHER RECHERCHENBERICHT

**Nummer der Anmeldung**

EP 97 81 0864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 462 205 A (GILES WALTER B ET AL)<br>* Zusammenfassung *<br>--- | 1 | |
| A | GB 391 619 A (E.AUGER) 25.Mai 1933<br>* Seite 1 *<br>* Seite 2, Zeile 1-29 *<br>* Abbildungen *<br>--- | 1 | |
| A | G.BIDINI,C.N. GRIMALDI AND L. POSTRIOTI: "Thermodynamic analysis of hydraulic air compressor-gas turbine power plants." PROC. OF THE INST. OF MECH. ENG.,JOURNAL OF POWER AND ENERGY,PART A., Bd. 211, Nr. 5, 1997, LONDON, Seiten 429-437, XP002062308<br>* das ganze Dokument *<br>----- | 1 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| DEN HAAG | 16.April 1998 | Criado Jimenez, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)